# EUROPÄISCHE PATENTSCHRIFT

(11) **EP 2 315 727 B1**
(45) Veröffentlichungstag und Bekanntmachung des Hinweises auf die Patenterteilung: **02.05.2018**
(21) Anmeldenummer: 09780699.6
(22) Anmeldetag: 16.07.2009
(51) Int. Cl.: C03B 17/04, C03B 19/01, C03B 19/04, C03B 19/09, C03B 20/00, C03B 19/06, C03B 19/10

(54) **VERFAHREN ZUR HERSTELLUNG VON MIT STICKSTOFF DOTIERTEM QUARZGLAS**
METHOD FOR PRODUCING QUARTZ GLASS DOPED WITH NITROGEN
PROCÉDÉ DE PRODUCTION DE VERRE DE QUARTZ DOPÉ À L'AZOTE

(30) Priorität: 19.07.2008 DE 102008033945
(43) Veröffentlichungstag der Anmeldung: 04.05.2011
(73) Patentinhaber: Heraeus Quarzglas GmbH & Co. KG, 63450 Hanau (DE)
(72) Erfinder: TROMMER, Martin, D-06749 Bitterfeld-Wolfen (DE); OCHS, Stefan, D-65520 Bad Camberg (DE); WEBER, Juergen, D-63801 Kleinostheim (DE); WERDECKER, Waltraud, D-63456 Hanau am Main (DE); TRAEGER, Norbert, D-63477 Maintal (DE); LEBER, Helmut, D-63454 Hanau (DE)
(74) Vertreter: Staudt, Armin Walter
(86) Internationale Anmeldenummer: PCT/EP2009/059141
(87) Internationale Veröffentlichungsnummer: WO 2010/010036

(56) Entgegenhaltungen:
- EP-A1- 0 955 273
- DE-A1- 2 425 262
- DE-A1- 19 541 372
- DE-A1-102005 017 739
- DE-B1- 2 263 589
- US-A- 2 155 131
- US-B1- 6 381 986
- DATABASE WPI Week 199712 Thomson Scientific, London, GB; AN 1997-128532 XP002557682 & JP 09 012322 A (NIPPON SILICA GLASS CO LTD) 14. Januar 1997 (1997-01-14)

## Beschreibung

Die Erfindung betrifft ein Verfahren zur Herstellung von mit Stickstoff dotiertem Quarzglas, bei dem ein SiO₂-Basisprodukt in Form von synthetisch erzeugter SiO₂-Körnung oder eines aus der SiO₂-Körnung bestehenden, porösen Halbzeugs bereitgestellt und das SiO₂-Basisprodukt in einem Heißprozess in einer ein stickstoffhaltiges Reaktionsgas enthaltenden Atmosphäre zu dem Quarzglas mit darin chemisch gebundenem Stickstoff verarbeitet wird.

Für Fertigungsprozesse, bei denen es auf hohe Reinheit ankommt, werden häufig Bauteile aus Quarzglas eingesetzt. Die Temperaturstabilität von Quarzglas bildet dabei einen begrenzenden Faktor. Als unterer Erweichungspunkt für Quarzglas werden in der Literatur Temperaturwerte um 1150 °C angegeben. Häufig liegen die erforderlichen Prozesstemperaturen jedoch oberhalb dieser Temperatur, so dass es zu plastischen Verformungen der Quarzglasbauteile kommen kann. Daher liegt von jeher auf der Verbesserung der thermischen Stabilität von Quarzglasbauteilen, wie Tiegeln, Rohren, Haltern, Glocken und dergleichen ein besonders Augenmerk, und eine Vielzahl von Maßnahmen dafür sind vorgeschlagen worden.

### Stand der Technik

Eine Dotierung mit Stickstoff bewirkt bekanntermaßen eine Erhöhung der Viskosität von Quarzglas. Für die Stickstoffdotierung ist eine Vielzahl von Methoden bekannt.

In der DE 10 2005 017 739 A1 wird ein mit Stickstoff dotiertes Quarzglas für einen Waferhalter beschrieben, das sich durch hohe thermische Stabilität und Trockenätzbeständigkeit auszeichnet. Die Stickstoffdotierung wird durch eine Behandlung des Quarzglas-Halters in einer Ammoniak-Atmosphäre bei 1100 °C erzeugt. Da die Eindiffusion von Stickstoff in dichtes Quarzglas durch Diffusion bestimmt ist, wird eine oberflächennahe Stickstoff-Beladung des Quarzglas-Halters erreicht. Um eine Dotierung des gesamten Volumens zu erreichen, wird vorgeschlagen, einen noch porösen SiO₂-Sootkörper in einer ammoniakhaltigen Atmosphäre zu sintern und anschließend bei einer Temperatur im Bereich von 1400 °C bis 2000 °C unter Überdruck in einer nicht oxidierenden Atmosphäre zu verglasen. Diese Verfahrensweise zur Dotierung eines Sootkörpers mit Stickstoff ist auch aus der DE 695 29 824 T2 bekannt.

In der JP 54087534 A wird ein Verfahren zur Herstellung von Quarzglas für optische Anwendungen nach dem MCVD-Verfahren beschrieben. Dabei wird ein Substratrohr innenbeschichtet, das zur Erhöhung der Viskosität mit Stickstoff dotiert ist. Das Substratrohr wird hergestellt, indem ein poröses Ausgangsrohr bereitgestellt wird, das vorab mit B₂O₃ dotiert wird und die mit B₂O₃ dotierte Phase anschließend herausgelaugt wird. Dieses poröse Rohr wird in einer Atmosphäre, die Ammoniak und Stickstoffmonoxid (NO) enthält, bei einer Behandlungstemperatur unterhalb Sintertemperatur behandelt, so dass sich eine Stickstoff-Dotierung ergibt. Anschließend wird das mit Stickstoff dotierte Quarzglasrohr zu dem Substratrohr verglast.

In der GB 2129417 A werden Außen- und Innenabscheideverfahren zur Herstellung von synthetischem, mit Stickstoff dotiertem Quarzglas beschrieben. Dabei werden siliziumhaltige Ausgangssubstanzen in einer Atmosphäre gebildet, die eine Stickstoffverbindung und eine oxidierende Verbindung enthält. Als Stickstoffverbindung wird Ammoniak genannt und als oxidierende Verbindung werden O₂, CO₂ oder NO₂ genannt.

In der GB 1450123 A geht es um die Herstellung optischer Fasern aus Quarzglas, das mit Stickstoff dotiert ist. Die Herstellung des Quarzglases erfolgt durch ein Plasma-Abscheideverfahren. Als stickstoffhaltiger Reaktionspartner wird in erster Linie Ammoniak empfohlen; es werden aber auch andere Stickstoffverbindungen als Oxidationsmittel genannt, unter anderem auch Distickstoffmonoxid (N₂O).

In der EP 0 955 273 A1 wird ein OVD-Abscheideverfahren zur Herstellung einer optischen Vorform beschrieben. Auf einem um seine Längsachse rotierenden Substratkörper wird eine SiO₂-Sootschicht unter Einsatz von SiCl₄ abgeschieden und diese anschließend zu einem dotierten Quarzglas gesintert. Um die Reaktionstemperatur bei der Umsetzung von SiCl₄ zu verringern wird Distickstoffmonoxid (N₂O) eingesetzt, das gleichzeitig als Oxidationsmittel für SiCl₄ und somit als Reaktionshilfsmittel zur Umsetzung von SiCl₄ dient.

In der JP 62176937 A wird ein Verfahren zum Dotieren von Quarzglas mit Fluor beschrieben. Hierzu wird SiH₄ in einer Sauerstoff-Unterschuss-Atmosphäre oxidiert, so dass sich ein poröser Sootkörper aus unterstöchiometrischem SiOₓ (0<x<2) bildet. Der poröse Sootkörper wird anschließend in einer fluorhaltigen Atmosphäre behandelt, wobei das Silizium-Atom der unterstöchiometrischen SiOₓ-Verbindung mit Fluor unter Bildung von SiF₄ reagieren soll.

Aus der US 2,155,131 A ist ein Tiegelziehverfahren zur Herstellung eines Quarzglasstrangs bekannt. Im Ziehtiegel wird eine reduzierende Atmosphäre aus Stickstoff oder aus einer Mischung aus Stickstoff und Wasserstoff erzeugt.

In der DE 19541372 A wird ein Verfahren zur Herstellung eines Quarzglastiegels beschrieben, wobei eine Körnungsschicht auf der Innenwandung einer tiegelförmigen Vakuum-Schmelzform aufgebracht und mittels Lichtbogen verglast wird. Dabei wird dem Schmelzform-Innenraum ein Gasstrom aus Helium oder Stickstoff zugeführt und gleichzeitig ein durch die Wandung greifendes Vakuum angelegt. Auf diese Weise soll die Entstehung von gashaltigen Blasen vermieden werden.

In JP 4349191 A geht es um einen Quarzglastiegel mit einer Innenschicht, die mit Stickstoff und Kohlenstoff dotiert ist. Die Stickstoffdotierung liegt im Bereich von 100 bis 4.000 ppm und wird durch Erhitzen des Tiegels mittels Lichtbogen in stickstoffhaltiger Atmosphäre eingestellt.

Die JP 09-012322 A beschreibt ein Verfahren zur Herstellung von transparentem Quarzglas durch Sintern von amorphen Partikeln mit Partikelgrößen im Bereich von 0,5 bis 50 pm unter Vakuum und bei einer Temperatur im Bereich von 1300-1600 °C unter Bildung eines porenfreien Sinterkörpers, der anschließend unter Stickstoff oder Ar erschmolzen wird.

Die vorliegende Erfindung betrifft demgegenüber die Stickstoff-Dotierung von Quarzglas, das aus körnigem SiO₂ erzeugt wird. Dabei wird ausgegangen von einem SiO₂-Basisprodukt, das entweder in Form von SiO₂-Körnung vorliegt, oder als poröses Halbzeug - bestehend aus derartiger Körnung. Bei der Körnung handelt es sich um teilchenförmiges SiO₂ mit Teilchengrößen im µm-Bereich, wobei die SiO₂-Teilchen synthetisch erzeugt sind. Die synthetischen Herstellungsverfahren für Quarzglaskörnung sind allgemein bekannt und umfassen CVD-Verfahren oder das so genannte Sol-Gel-Verfahren. Dabei fallen häufig sehr feinteilige SiO₂-Pulver an, die zu Granulaten weiterverarbeitet werden, welche ebenfalls SiO₂-Körnung im Sinne dieser Erfindung darstellen. Bei dem Halbzeug handelt es sich um Teilchen-Schüttungen oder mechanisch oder thermisch vorverfestigte, poröse Formkörper aus SiO₂-Körnung oder um so genannte "Grünkörper", die beispielsweise beim Schlickergießverfahren als poröses Zwischenprodukt entstehen.

Das Dotieren von derartigen Basisprodukten mit Stickstoff zwecks Verbesserung der thermischen Stabilität ist in der US 6,381,986 B1 beschrieben, wobei eine Anzahl von Methoden vorgeschlagen werden. Beispielsweise wird für die Herstellung eines mit Stickstoff dotierten Quarzglastiegels ein Schlickerverfahren eingesetzt. Dabei wird eine SiO₂-Körnung in eine Suspension aufgenommen und zu einem porösen Grünkörper des Quarzglastiegels geformt. Nach dem Trocknen des Grünkörpers wird dieser bei einer Temperatur im Bereich von 850 °C bis 1200°C in einer Ammoniak enthaltenden Atmosphäre behandelt und anschließend bei hoher Temperatur verglast. Auf diese Weise wird eine hohe Konzentration an Stickstoff im Quarzglasnetzwerk und damit einhergehend eine hohe Wärmebeständigkeit erreicht.

Beim Einsatz von Ammoniak zur Erzeugung der Stickstoff-Beladung des Quarzglases bildet sich bei einer Zersetzung des Ammoniaks gleichzeitig Wasserstoff, der zu reduzierenden Schmelzbedingungen und zu einem merklichen Einbau von Hydroxylgruppen in das Quarzglas führen, was mit einer Abnahme der Viskosität des Quarzglases einhergeht.

Der Gesamt-Stickstoffgehalt des Quarzglases setzt sich aus einem Anteil an physikalisch gelöstem Stickstoff und einem Anteil an chemisch im Netzwerk des Quarzglases fest gebundenem Stickstoff zusammen. Der nur physikalisch gelöste Stickstoff wird beim Aufheizen des dotierten Quarzglastiegels bei relativ niedrigen Temperaturen freigesetzt und führt zu einer Blasenbildung und damit zu einer Erodierung der Tiegelwandung.

### Aufgabenstellung

Der Erfindung liegt daher die Aufgabe zugrunde, ein Verfahren anzugeben, mittels dem in Quarzglas, das als Quarzglaskörnung vorliegt, eine Stickstoffdotierung mit einem möglichst hohen Anteil an chemisch gebundenem Stickstoff erreichbar ist.

Weiterhin liegt der Erfindung die Aufgabe zugrunde, eine zur Durchführung dieses Verfahrens besonders geeignete Quarzglaskörnung bereitzustellen.

Hinsichtlich des Verfahrens wird diese Aufgabe ausgehend von dem Verfahren der eingangs genannten Gattung erfindungsgemäß dadurch gelöst,. dass als stickstoffhaltiges Reaktionsgas ein Stickoxid eingesetzt wird, und dass ein SiO₂-Basisprodukt eingesetzt wird, das beim Heißprozess bei einer Behandlungstemperatur im Temperaturbereich zwischen 650 und 1.000 °C und in einer Atmosphäre behandelt wird, die mindestens zeitweise zwischen 2 und 50 Vol.-% Stickoxid enthält, und das eine Konzentration an Sauerstoffmangeldefekten von mindestens 2 x 10¹⁵ cm⁻³ aber weniger als 2 x 10¹⁹ cm⁻³ aufweist, wobei das SiO₂-Basisprodukt aus SiO₂-Teilchen mit einer mittleren Teilchengröße im Bereich von 1 µm bis 200 µm besteht (D₅₀-Wert) und wobei der Stickstoffgehalt des Quarzglases auf einen Mittelwert im Bereich zwischen 1 Gew.-ppm und 3.000 Gew.-ppm eingestellt wird.

Das SiO₂- Basisprodukt in Form von Körnung oder als ein aus Körnung geformtes Halbzeug wird zwecks einer Stickstoffdotierung einem Heißprozess bei hoher Temperatur unterzogen. Bei diesem Heißprozess handelt es sich entweder um einen Schmelz- oder Sinterprozess, bei dem aus der Körnung oder dem Halbzeug ein Quarzglasbauteil erzeugt wird, wobei während des Schmelz- oder Sinterprozesses die gewünschte Stickstoffbeladung des Quarzglases erzeugt wird (oder eine vorab bestehende Stickstoffbeladung erhöht wird). Oder es handelt sich bei diesem Heißprozess um einen dem Schmelz- oder Sinterprozess vorgelagerten Dotierungsschritt, an dessen Ende eine mit Stickstoff beladene SiO₂-Körnung oder ein mit Stickstoff beladenes poröses Halbzeug steht, das anschließend weiter verarbeitet wird.

Der Stickstoff wird in das Quarzglas des SiO₂-Basisprodukts über die Gasphase eingebracht, wie dies auch sonst aus dem Stand der Technik bekannt ist. Erfindungsgemäß wird dabei ein Reaktionsgas eingesetzt, das ein Stickoxid oder mehrerer Stickoxide enthält. Als Stickoxid kommen beispielsweise N₂O, NO, NO₂ und Mischungen dieser Gase in Betracht, wobei auch andere Gase, wie etwa Edelgase, Sauerstoff, Stickstoff oder Ammoniak zugegen sein können.

Bei der thermischen Zersetzung von Stickoxid entstehen reaktive Stickstoffatome, die bereits bei niedrigen Temperaturen (< 1.200 °C) mit dem Quarzglas-Netzwerk unter Bildung von Si-N, Si-ON, Si-NH-Bindungen und anderer StickstoffVerbindungen reagieren können. Diese Reaktionen führen zu einer festen chemischen Einbindung des Stickstoffs in das Quarzglas-Netzwerk.

Die Stickstoff-Beladung des Quarzglases des Basisprodukts erfolgt durch thermisch-oxidative Behandlung des Basisprodukts über die Gasphase. Durch Zersetzung des Stickoxids bildet sich dabei eine oxidierend wirkende Atmosphäre, die auch explosiv reagieren kann. Die Stickstoff-Beladung erfordert daher eine technische Umgebung (Werkstoffe, Atmosphäre), die gegen Oxidation beständig oder weitgehend unempfindlich ist. Dabei kann es sich um einen Ofen handeln, wobei als bevorzugtes Beispiel ein Drehrohrofen zu nennen ist, einen Wirbelschichtreaktor oder in einen Schmelzofen oder Schmelztiegel. Ein Partialdruck des Stickoxids oder der Stickoxide von 1 atm genügt in aller Regel für eine ausreichend hohe Stickstoff-Beladung. Bei einer Beladung unter einem höheren Partialdruck sind höhere Stickstoff-Beladungen in Quarzglas erzielbar, bei denen es jedoch leicht bei erneutem Aufheizen zu einem Aufschäumen kommen kann.

So hat es sich beispielsweise gezeigt, dass durch eine Dotierung mit Stickstoff gemäß der Erfindung eine Erhöhung der Ätzbeständigkeit um bis zu 80 % gegenüber stickstofffreiem Quarzglas möglich ist. Andererseits besteht bei stickstoffbeladenem Quarzglas die Gefahr einer Blasenbildung bei nachfolgenden Heißprozessen. So konnten in Versuchen bis zu 300.000 Gew.-ppm Stickstoff in Quarzglas eingebracht werden, wobei sich dann jedoch eine hohe Blasigkeit und Opazität einstellt. Bei einem Stickstoffgehalt im Bereich von 2.000 bis 3.000 Gew.-ppm ist ein transparentes Quarzglas herstellbar mit einem Blasengehalt, der gering und für viele Anwendungen akzeptabel ist. Ein mit 2.000 Gew.-ppm mit Stickstoff beladenes Quarzglas zeigt immer noch eine Verbesserung in Bezug auf die Ätzbeständigkeit um etwa 30 % gegenüber stickstofffreiem Quarzglas.

Wesentlich beim erfindungsgemäßen Verfahren ist, dass ein SiO₂-Basisprodukt eingesetzt wird, das beim Heißprozess eine Konzentration an Sauerstoffmangeldefekten von mindestens 2 x 10¹⁵ cm⁻³, vorzugsweise mindestens 1 x 101⁶ cm⁻³, aufweist.

Die Netzwerkstruktur von Quarzglas kann eine Vielzahl von Defekten aufweisen. Eine Gruppe solcher Defekte sind Sauerstoffmangeldefekte, bei denen Sauerstoffstellen des Netzwerks unbesetzt oder von anderen Atomen besetzt sind. Bekannte Beispiele dafür sind direkte -Si-Si-Bindungen (163 nm und 243 nm) und ein nur zweifach koordiniertes Siliziumatom (247 nm), wobei in Klammern die Absorptionswellenlänge der jeweiligen Defektstelle angegeben ist. Es hat sich gezeigt, dass reaktive Stickstoffatome, wie sie sich aufgrund der Zersetzung des Stickoxids bilden, mit vorhandenen Fehlstellen der Quarzglas-Netzwerkstruktur und insbesondere mit Sauerstoffmangeldefekten besonders leicht reagieren können. Im Fall von Sauerstoffmangeldefekten werden die vakanten Sauerstoffstellen durch Stickstoff besetzt, so dass sich stabile Si-N-Bindungen bilden. Auf diese Weise gelingt eine besonders hohe Beladung des Quarzglases, und zwar mit chemisch gebundenem Stickstoff bei der Durchführung des Heißprozesses (also beim Dotieren, Verglasen (Sintern) oder Erschmelzen des Basisprodukts). Die Konzentration an Sauerstoffmangeldefekten von mindestens 2 x 10¹⁵ cm⁻³ wird vor oder während des Heißprozesses eingestellt.

Die Konzentration an Sauerstoffmangeldefekten in Quarzglas wird indirekt durch den Transmissionsverlust ermittelt. Der Transmissionsverlust beruht dabei auf der Aufspaltung der Sauerstoff-Fehlstellen unter Laserbestrahlung in jeweils zwei so genannte E'-Zentren, die eine charakteristische Absorption bei einer Wellenlänge von 210 nm zeigen.

Bei einem SiO₂-Basisprodukt aus synthetischem Quarzglas können die Sauerstoffmangeldefekte bereits bei der Herstellung der SiO₂-Teilchen erzeugt werden. Alternativ oder ergänzend dazu hat es sich auch bewährt, die Sauerstoffmangeldefekte durch eine Temperaturbehandlung des SiO₂-Basisprodukts in reduzierend wirkender Atmosphäre zu erzeugen.

In dem Zusammenhang ist es auch wesentlich, dass das SiO₂-Basisprodukt gemäß der Erfindung aus SiO₂-Teilchen mit einer mittleren Teilchengröße im Bereich von 1 µm bis 200 µm (D₅₀-Wert) besteht.

Dabei handelt es sich um feinteilige Körnung mit großer spezifischer Oberfläche, die sowohl im Hinblick auf eine nachträgliche Erzeugung von Defektstellen als auch hinsichtlich der auf Diffusionsprozessen beruhenden Beladung der SiO₂-Teilchen mit Stickstoff wegen der kurzen Diffusionswege vorteilhaft ist. Das heißt insbesondere, dass sich Sauerstoffmangeldefekte in Quarzglas aufgrund reduzierend wirkender Atmosphäre, energiereicher Strahlung oder hoher Temperatur leichter einstellen, zum Beispiel auch noch während des Heißprozesses zwecks Verglasen (Sintern) oder Erschmelzen oder der Stickstoffbeladung des SiO₂-Basisprodukts. Dabei wird angenommen, dass der Mechanismus der Stickstoff-Beladung über die Besetzung von Sauerstoffmangeldefekten nur in oberflächennahen Bereichen des Basisprodukts wirksam ist.

Neben der hohen Ätzbeständigkeit zeichnet sich das so erhaltene Quarzglas durch eine Viskosität bei einer Temperatur von 1.200°C mindestens 10¹³ dPas aus.

Im Hinblick auf eine hohe Dotierung mit Stickstoff ohne Blasenbildung wird vorzugsweise ein SiO₂-Basisprodukt eingesetzt, das beim Heißprozess eine Konzentration an Sauerstoffmangeldefekten von mindestens 1 x 10¹⁶ cm⁻³, aufweist.

Eine sehr hohe Konzentration an Sauerstoffmangeldefekten (> 2 x 10¹⁹ cm⁻³) kann jedoch zu einer unerwünscht hohen Beladung mit Stickstoff beitragen und zum Aufschäumen des Quarzglases beim Erhitzen führen.

Weiterhin hat es sich als günstig erwiesen, wenn das SiO₂-Basisprodukt aus SiO₂-Teilchen mit einer mittleren Teilchengröße im Bereich von 2 µm bis 60 µm, besteht (D₅₀-Wert).

Dabei handelt es sich um besonders feinteilige Körnung mit großer spezifischer Oberfläche und den weiter oben bereits erläuterten Wirkungen hinsichtlich der nachträglichen Erzeugung von Defektstellen und der Beladung der SiO₂-Teilchen mit Stickstoff.

Im Hinblick auf die Herstellung eines Quarzglases mit einem sehr geringen Blasengehalt und gleichzeitig einer geringen Neigung zum Aufschäumen hat es sich als vorteilhaft erwiesen, wenn der Stickstoffgehalt des Quarzglases im Bereich zwischen 1 Gew.-ppm und 150 Gew.-ppm eingestellt wird.

Bei Stickstoffgehalten unterhalb von 1 Gew.-ppm ergibt sich eine geringe Wirkung in Bezug auf die Ätzbeständigkeit und die thermische Stabilität, und bei Stickstoffgehalten oberhalb von 150 Gew.-ppm besteht bereits eine gewisse Tendenz zu einer Blasenbildung, bevorzugt liegt der Stickstoffgehalt unterhalb von 100 Gew.-ppm.

Die Messung des Stickstoffgehalts erfolgt mittels eines Gasanalyseverfahrens, das als "Trägerheißgasextraktion" bekannt ist. Dabei wird eine genau eingewogene Probemenge in einem Graphit-Tiegel sehr hoch erhitzt und das dabei frei gesetzte Stickstoffgas anhand der Wärmeleitfähigkeit der Messzellen erfasst. Für Stickstoff liegt die Nachweisbarkeitsgrenze dieser Methode unter 1 Gew.-ppm.

Als stickstoffhaltiges Reaktionsgas hat sich Distickstoffmonoxid als besonders geeignet erwiesen.
Distickstoffmonoxid (N₂O; Lachgas) ist in geringen Mengen gesundheitlich nahezu unbedenklich. Es zersetzt sich bei einer Temperatur um 650 °C und setzt dabei reaktiven Stickstoff frei, der mit der Netzwerkstruktur des Quarzglases reagieren kann.
Der Stickoxidgehalt der Atmosphäre beträgt während der Stickstoff-Beladung mindestens zeitweise zwischen 2 und 50 Vol.-%, vorzugsweise zwischen 5 und 20 Vol.-%.
Bei Stickoxidgehalten unterhalb von 2 Vol.-% ergibt sich eine geringe Stickstoff-Beladung und eine geringe viskositätssteigernde Wirkung, und bei Stickoxidgehalten oberhalb von 50 Vol.-% kann es zu einer Überbeladung mit Stickstoff und einer Blasenbildung bei nachfolgenden Hochtemperaturprozessen kommen.
Der Heißprozess umfasst eine Behandlungsphase, bei der das SiO₂-Basisprodukt bei einer Behandlungstemperatur im Temperaturbereich zwischen 650 und 1.000 °C, erfolgt.
Die Temperatur während der Behandlungsphase zwecks Nitridierung des Basisprodukts ist so gewählt, dass einerseits die Aktivierungsenergie für die thermischen Zersetzung des Stickoxids bereitsteht, und andererseits eine Agglomeration der SiO₂-Teilchen oder die Ausbildung einer die weitere Diffusion des Stickoxids hemmenden dichtgesinterten Schicht vermieden wird. So wird sichergestellt, dass die gasförmigen Behandlungsreagenzien die Anhäufung von SiO₂-Teilchen oder des porösen Halbzeugs durchdringen und gleichmäßig mit dem Quarzglas-Netzwerk reagieren können. Dies führt zu einer gleichmäßigen Verteilung des Stickoxids in einer Aufschüttung der SiO₂-Teilchen, beziehungsweise in einer aus den Teilchen geformten, porösen Körnungsschicht beim Tiegelherstellungsprozess, was zu einer homogenen Stickstoff-Beladung der SiO₂-Teilchen beiträgt.

Dabei hat es sich besonders bewährt, wenn die Behandlungsphase eine Niedrigtemperatur-Behandlungsphase umfasst, bei der die Behandlungstemperatur niedriger als 500 °C, vorzugsweise niedriger als 450 °C, eingestellt wird.

Während der Niedrigtemperatur-Behandlungsphase wird das Stickoxid im Wesentlichen gleichmäßig innerhalb des durchlässigen, porösen SiO₂-Basisprodukts verteilt, wobei eine Zersetzung des Stickoxids und die Ausbildung von Si-N-Bindungen im Quarzglas unterdrückt werden. Die Maximaltemperatur bei diesem Verfahrensschritt ist daher abhängig vom eingesetzten Stickoxid (die hier genannten Temperaturwerte sind optimal für N₂O). Wegen der niedrigen Temperaturen bleibt die poröse Struktur des Basisprodukts erhalten, so dass sichergestellt ist, dass die gasförmigen Behandlungsreagenzien das poröse und durchlässige Basisprodukt durchdringen und sich gleichmäßig darin verteilen können, wobei auch eine Diffusion in oberflächennahe Bereiche der SiO₂-Teilchen erfolgen kann.

Es hat sich außerdem bewährt, wenn das SiO₂-Basisprodukt in einem Verglasungsschritt zu einem transparenten oder opaken Quarzglas gesintert oder erschmolzen wird, wobei das SiO₂-Basisprodukt vor dem Verglasungsschritt dem Heißprozess zur Beladung mit Stickstoff unterzogen wird.

Hierbei wird für den Verglasungsprozess ein SiO₂-Basisprodukt eingesetzt, das vorab mit Stickstoff beladen worden ist. Bei einem Basisprodukt aus synthetisch erzeugtem SiO₂ erfolgt die Stickstoff-Beladung entweder bei der Teilchenherstellung, wobei insbesondere eine Stickstoffbeladung beim Sintern von SiO₂-Granulatkörnern aus Agglomeraten von SiO₂-Nanoteilchen in einer das Stickoxid enthaltenden Atmosphäre in Betracht kommt. Oder die Stickstoffbeladung des Basisprodukts in Form einer losen Schüttung verglaster SiO₂-Teilchen erfolgt in einer das Stickoxid enthaltenden Atmosphäre. Ein Vorteil dieser Verfahrensweise liegt darin, dass in dem Basisprodukt bereits vor dem Verglasen (Sintern) oder Schmelzen ein definierter und überprüfbarer Stickstoffgehalt ohne die beschränkenden Randbedingungen des Verglasungs- oder Schmelzvorgangs einstellbar ist. Dies verbessert die Reproduzierbarkeit des Verfahrens. Durch eine zusätzliche Nitridierung während des Verglasungsschrittes können etwaige Verluste an Stickstoff kompensiert oder vermieden oder die Stickstoffkonzentration im Endprodukt erhöht werden.

SiO₂-Teilchen aus synthetischem Material sind in der Regel sehr feinteilig und daher für derartige Einschmelzverfahren nicht oder nur nach einer Aufbereitung, wie etwa einer Granulation, uneingeschränkt einsetzbar. Andererseits können gerade die synthetischen SiO₂-Teilchen - auch wegen ihrer geringen Größe - verhältnismäßig leicht mit Defekten der Netzwerkstruktur versehen werden. Dabei können die synthetisch erzeugten SiO₂-Teilchen beim Verglasen oder Sintern mit Stickstoff beladen werden, oder auch bereits vorab mit Stickstoff beladen worden sein.
Es hat sich bewährt, wenn der Atmosphäre beim Heißprozess keine Halogene zugeführt werden.
Die Gegenwart von Halogenen beim Heißprozess führt zu einer Beladung des Quarzglases mit Halogenen, teilweise im Austausch zu der gewünschten Stickstoffbeladung, und damit zu einer Absenkung der Viskosität des Quarzglases. Die anhand des Verfahrens erhaltene Quarzglaskörnung enthält synthetisch erzeugte SiO₂-Teilchen mit einer mittleren Teilchengröße im Bereich von 1 bis 200 µm (D₅₀-Wert), die eine Konzentration an Sauerstoffmangeldefekten von mindestens 2 x 10¹⁵ cm⁻³ aber weniger als 2 x 10¹⁹ cm⁻³ aufweisen und die mit Stickstoff in einer mittleren Konzentration im Bereich zwischen 1 Gew.-ppm und 3.000 Gew.-ppm beladen sind.
Die Körnung besteht aus SiO₂-Sootstaub, SiO₂-Granulat, glasigen SiO₂-Körnungen oder aus gemahlenem Quarzglaspulver. Sie zeichnet sich dadurch aus, dass die synthetisch erzeugten SiO₂-Teilchen eine mittlere Teilchengröße im Bereich von 1 bis 200 µm aufweisen, und die alle oder überwiegend aus Quarzglas bestehen, das einen Mindestgehalt an Sauerstoff-Mangeldefekten enthält.
Diese feinteilige und mit Sauerstoffmangeldefekten versehene Körnung ist für eine nachträgliche Beladung mit Stickstoff unter Erzeugung von chemisch im Quarzglas-Netzwerk gebundenem Stickstoffs besonders gut konditioniert. Die relativ feinteilige Quarzglaskörnung (oder Granulat) zeichnet sich durch eine große spezifische Oberfläche aus, die hinsichtlich der auf Diffusionsprozessen beruhenden Beladung der SiO₂-Teilchen mit Stickstoff wegen der kurzen Diffusionswege vorteilhaft ist. Auch können sich im Verlauf der weiteren Verarbeitung der Körnung zusätzliche Sauerstoffmangeldefekte aufgrund reduzierend wirkender Atmosphäre oder hoher Temperatur leichter einstellen, zum Beispiel beim Verglasen (Sintern) oder Erschmelzen. Dabei wird angenommen, dass der Mechanismus der Stickstoff-Beladung über die Besetzung von Sauerstoffmangeldefekten nur in oberflächennahen Bereichen der Körnung wirksam ist.

Die Herstellung der Sauerstoffmangeldefekte in der Quarzglaskörnung erfolgt beispielsweise bei der Herstellung der SiO₂-Teilchen durch Einstellen einer reduzierend wirkenden Atmosphäre oder alternativ oder ergänzend dazu durch Temperaturbehandlung in reduzierend wirkender Atmosphäre bei einer Temperatur von mindestens 500 °C.

Die synthetisch erzeugten SiO₂-Teilchen sind vorab mit Stickstoff in einer mittleren Konzentration bis maximal 3.000 Gew.-ppm und vorzugsweise im Bereich zwischen 1 Gew.-ppm und 150 Gew.-ppm beladen.

Bei Einsatz einer Quarzglaskörnung mit einem Stickstoffgehalt im Bereich von 2.000 bis 3.000 Gew.-ppm ist ein Quarzglas herstellbar mit einem Blasengehalt, der für viele Anwendungen akzeptabel ist, das aber eine Verbesserung in Bezug auf die Ätzbeständigkeit um etwa 30 % gegenüber stickstofffreiem Quarzglas aufweist. Zur Herstellung eines Quarzglases mit einem sehr geringen Blasengehalt und gleichzeitig einer geringen Neigung zum Aufschäumen wird vorzugsweise eine Quarzglaskörnung eingesetzt, deren Stickstoffgehalt maximal 150 Gew.-ppm beträgt. Bei Stickstoffgehalten unterhalb von 1 Gew.-ppm ergibt sich eine geringe Wirkung in Bezug auf die Ätzbeständigkeit und die thermische Stabilität.

Die Stickstoffbeladung der Quarzglaskörnung kann durch Einsatz von Stickoxiden folgen, wie dies weiter oben erläutert ist, aber auch durch Einsatz anderer stickstoffhaltiger Verbindungen, wobei insbesondere Stickstoff und Ammoniak zu nennen wären.

Wichtig ist, dass beim Dotierungsprozess Stickstoff bereitsteht, der mit den Defektzentren der Glas-Netzwerkstruktur reagieren und die Sauerstoff-Fehlstellen besetzen kann. Dabei bildet sich eine Si-N-Verbindung, die zu einer chemischen Einbindung des Stickstoffs in das Quarzglas-Netzwerk führt.

Beim Einsatz oxidierend wirkender Stickstoffverbindungen (zum Beispiel den oben genannten Stickoxiden) zur Stickstoff-Beladung ergibt sich ein weiterer positiver Effekt, der darin liegt, dass zusätzlich zu dem atomaren Stickstoff auch atomarer Sauerstoff entsteht, der bei gleicher Temperatur wesentlich reaktiver ist als molekularer Sauerstoff und der mit oxidierbaren Verunreinigungen, etwa kohlenstoffhaltigen Partikeln, Kohlenwasserstoffen und organische Verunreinigungen, wie sie in SiO₂-Pulern, -Körnungen oder -Granulaten herstellungsbedingt enthalten sein können, reagiert, wodurch diese entfernt werden und in späteren Heißbearbeitungsprozessen somit nicht zu Nachteilen führen können, wie etwa zu Einschlüssen oder zu Blasenbildung.

Ein weiterer Effekt ergibt sich im Fall der Stickoxid-Behandlung einer Quarzglaskörnung, die vorab in einem Heißchlorierungsprozess gereinigt worden ist und die einen Restgehalt an Chlor enthält. Es hat sich gezeigt, dass auch der Chlorgehalt durch eine Behandlung in einer stickoxidhaltigen Atmosphäre reduziert werden kann.

Beim Einsatz von Ammoniak zur Erzeugung der Stickstoff-Beladung des Quarzglases ergibt sich bei Temperaturen oberhalb von 1.250 °C durch die Zersetzung des Ammoniaks und die gleichzeitige Anwesenheit von Wasserstoff ein merklicher Einbau von Hydroxylgruppen in das Quarzglas, was zu einer Abnahme der Viskosität des Quarzglases führen kann. Im Hinblick auf die gegenläufigen Effekte, nämlich einerseits die Abnahme der Viskosität durch den Einbau von Hydroxylgruppen und andererseits zu Zunahme der Viskosität durch den Einbau von Stickstoff wird daher der Einsatz von Ammoniak nur bevorzugt, wenn die Nitridierungstemperatur unterhalb von 1170 °C liegt. Diesen Nachteil weisen wasserstofffreie Stickoxide nicht auf, so dass diese bevorzugt zur Stickstoffbeladung der Quarzglaskörnung eingesetzt werden.

Je höher der Gehalt an Sauerstoffmangeldefekten in der Quarzglaskörnung ist, umso leichter erfolgt die Beladung mit Stickstoff. Daher weisen die synthetisch erzeugten SiO₂-Teilchen bei der Quarzglaskörnung vorzugsweise eine Konzentration an Sauerstoffmangeldefekten von mindestens 1 x 101⁶ cm⁻³ auf.

Weiterhin hat sich eine Quarzglaskörnung besonders bewährt, bei der die synthetisch erzeugten SiO₂-Teilchen eine mittlere Teilchengröße im Bereich von 2 µm bis 60 µm aufweisen (D₅₀-Wert).

Dabei handelt es sich um besonders feinteilige Quarzglaskörnung oder Granulat, das hinsichtlich der Beladung mit Stickstoff und der Ausbildung zusätzlicher zusätzliche Sauerstoffmangeldefekte die weiter oben bereits erläuterten Wirkungen besonders deutlich entfaltet.

SiO₂-Teilchen aus synthetischem Material sind in der Regel sehr feinteilig und für Einschmelzverfahren schwierig handhabbar, können aber - auch wegen ihrer geringen Größe - verhältnismäßig leicht mit Defekten der Netzwerkstruktur versehen werden.

Die Quarzglaskörnung ist insbesondere für die Herstellung von Bauteilen geeignet, bei denen es auf eine hohe thermische und chemische Stabilität, und insbesondere auf eine hohe Beständigkeit gegenüber ätzend wirkenden Gasen und Flüssigkeiten ankommt. Derartige Anforderungen bestehen beispielsweise vielfach für Bauteile in der Halbleiterfertigung, der Optik und in der chemischen Verfahrenstechnik.

Bei einem ersten besonders bevorzugten Einsatzzweck wird die Quarzglaskörnung zur Herstellung eines Quarzglasstrangs aus mit Stickstoff dotierten Quarzglas eingesetzt, indem die Quarzglaskörnung in einen Innenraum
eines Schmelztiegels eingebracht, und darin bei einer Schmelztemperatur von mehr als 2.000 °C in einer Stickstoff enthaltenden Atmosphäre zu einer erweichten Quarzglasmasse erschmolzen, und die erweichte Quarzglasmasse als Quarzglasstrang aus einer Ziehdüse des Schmelztiegels abgezogen wird.

Hierbei handelt es sich um eine erfindungsgemäße Ausgestaltung eines Tiegelziehverfahrens unter Einsatz einer anhand des erfindungsgemäßen Verfahrens mit Sauerstoff-Defektzentren beladenen Quarzglaskörnung. Es hat sich gezeigt, dass infolge der hohen Schmelztemperatur weitere zahlreiche Defektzentren im Quarzglas erzeugt werden können, wie etwa -Si-Si-, -Si-H, -Si-OH, Si-O-O-Si-. Bei den traditionellen Verfahren werden derartige Defekte der Netzwerkstruktur durch zufällig anwesende Moleküle oder Atome abgesättigt, wobei es sich häufig um Chlor, OH-Gruppen oder im Innenraum des Schmelztiegels vorhandene Verunreinigungen handelt. Die so besetzten Defektzentren schwächen das Quarzglas-Netzwerk und verschlechtern im Allgemeinen dessen Eigenschaften, insbesondere die Temperaturbeständigkeit und die Korrosionsbeständigkeit, und sie führen zu einer Verringerung der Viskosität und erhöhen die Entglasungsneigung. Darüber hinaus kann es zu einer überhöhten Blasenbildung kommen, etwa wenn die entstandenen Defekte durch Chlor oder andere Verunreinigungen besetzt sind, die in nachfolgenden Heißbearbeitungsschritten ausgasen können.

Die Einschmelzkörnung oder ein Teil kann vorab mit Stickstoff beladen werden. In jedem Fall wird im Innenraum des Schmelztiegels zusätzlich Stickstoff angeboten, der infolge der hohen Temperaturen von mehr als 2.000 °C die oben erwähnten bereits vorhandenen und beim Einschmelzvorgang zusätzlich entstehende Defekte leicht absättigen kann, wobei feste Si-N-Bindungen entstehen. Das bedeutet, der Stickstoff wird in dem Netzwerk des Quarzglases fest eingebaut und gast in späteren Verfahrensschritten nicht mehr aus.

Es hat sich als besonders günstig erwiesen, wenn die Atmosphäre im Innenraum des Schmelztiegels Wasserstoff enthält.

Die Atmosphäre enthält außer dem stickstoffhaltigen Reaktionsgas Wasserstoff. Durch den Anteil an Wasserstoff ergibt sich eine reduzierende Atmosphäre, die - auch wegen der hohen Schmelztemperatur - zusätzlich dazu beiträgt, dass Sauerstoff-Defizitstellen in der Netzwerkstruktur der Quarzglaskörnung entstehen, die anschließend oder gleichzeitig durch den angebotenen Stickstoff beim Einschmelzvorgang besetzt werden können.

Bei dieser Verfahrensvariante wird bevorzugt eine Quarzglaskörnung eingesetzt, die aus einem Gemisch aus den synthetisch erzeugten SiO₂-Teilchen und aus SiO₂-Teilchen aus natürlich vorkommendem Rohstoff besteht.

Bei einer alternativen, gleichermaßen geeigneten Verfahrensvariante wird die mit Sauerstoff-Defektzentren beladene, gemäß des erfindungsgemäßen Verfahrens hergestellte Quarzglaskörnung zur Herstellung eines Quarzglastiegels aus mit Stickstoff dotiertem Quarzglas eingesetzt, indem aus der Quarzglaskörnung an einer Innenwandung eines Schmelztiegels eine Körnungsschicht geformt wird, und diese in einer Stickstoff enthaltenden Atmosphäre zu einer Quarzglasschicht gesintert wird.

Bei dieser Verfahrensvariante geht es um einen Tiegelschmelzprozess zur Herstellung eines Quarzglastiegels. Dieser weist eine Tiegelwandung auf, die vollständig oder teilweise aus einem mit Stickstoff dotierten Quarzglas besteht. Die stickstoffdotierte Tiegelwandung beziehungsweise der stickstoffdotierte Teil der Tiegelwandung, wird aus einer Körnungsschicht gebildet, bei der die SiO₂-Teilchen vorab in einem separaten Dotierprozess mit Stickstoff beladen worden sind (wie oben erläutert), oder bei der die SiO₂-Teilchen während des Tiegel-Schmelzprozesses mit Stickstoff beladen werden, indem der Schmelztiegelatmosphäre ein Reaktionsgas in Form von Stickstoff, Ammoniak, Stickoxiden oder anderen Stickstoff enthaltenen Gasen angeboten wird. Die hierbei eingesetzte Körnung weist Sauerstoff-Defektstellen auf, wie dies weiter oben bereits näher erläutert worden ist.

### Ausführungsbeispiel

Nachfolgend wird die Erfindung anhand eines Ausführungsbeispiels und einer Patentzeichnung näher beschrieben. Dabei zeigt im Einzelnen:
- **Figur 1**: eine Tiegelschmelzvorrichtung zum Ziehen eines Strangs aus Quarzglas gemäß der Erfindung in schematischer Darstellung,
- **Figur 2**: eine Schmelzvorrichtung zur Herstellung eines Tiegels aus Quarzglas gemäß der Erfindung in schematischer Darstellung,
- **Figur 3**: ein Diagramm mit dem Viskositätsverlauf über der Temperatur bei einem gemäß der Erfindung hergestellten Quarzglas im Vergleich zu einem Quarzglas gemäß dem Stand der Technik, und
- **Figur 4**: das Ergebnis einer Heißgasextraktion eines erfindungsgemäß hergestellten Quarzglases in Form eines Diagramms bei dem das ausgasende Volumen gegen die Aufheizdauer (Temperatur) aufgetragen ist.

### Beispiel 1: Herstellung von Quarzglas mit Sauerstoffdefektstellen

Es werden SiO₂-Sootkörper durch Flammenhydrolyse von SiCl₄ anhand des bekannten OVD-Verfahrens hergestellt. Die dabei als Filterstaub anfallenden nanoskaligen amorphen SiO₂-Partikel (Sootstaub) werden mittels eines üblichen Granulierverfahrens zu einem porösen SiO₂-Granulat verarbeitet. Nach dem Trocknen wird das SiO₂-Granulat in einem Heizofen mit einem Heizelement aus Grafit auf eine Temperatur von ca. 850 °C aufgeheizt und dabei vorverdichtet. Das im Heizofen vorhandene Grafit bewirkt die Einstellung reduzierender Bedingungen. Nach einer Behandlungsdauer von vier Stunden wird ein poröses SiO₂-Granulat erhalten.

Das Verglasen des Granulats erfolgt unter Vakuum bei einer Temperatur um 1.300 °C. Es wird eine hochreine Quarzglaskörnung aus amorphen, sphärischen SiO₂-Teilchen erhalten, deren mittlerer Teilchendurchmesser bei ca. 200 µm liegt und die sich durch einen Hydroxylgruppengehalt von etwa 25 Gew.-ppm und eine Konzentration an Sauerstoff-Defektzentren in einer Größenordnung von 1,7 x 10¹⁶ cm⁻³ auszeichnet.

### Beispiel 2: Beladen des porösen SiO₂-Granulats mit Stickstoff vor dem Verglasen

Das so hergestellte, sauerstoffdefekthaltige poröse SiO₂-Granulat wird einer oxidativ-thermischen Dotierbehandlung unterzogen und dabei mit Stickstoff beladen. Hierzu wird eine Schüttung des Granulats in einem zweistufigen Prozess zunächst bei einer Temperatur von 450 °C während einer Dauer von 1 Stunde in einem Gasstrom aus N₂O (10 Vol.-%), Rest Helium, behandelt. Diese Temperatur liegt unterhalb der Zersetzungstemperatur von N₂O, das sich in der Granulat-Schüttung gleichmäßig verteilt. In der zweiten Behandlungsphase wird die Schüttung auf eine Temperatur von 800 °C aufgeheizt und die Gasströmung durch eine ruhende Atmosphäre aus N₂O (10 Vol.-%), Rest Helium, ersetzt. Das gleichmäßig verteilte N₂O zersetzt sich dabei unter Bildung von atomarem Stickstoff und atomarem Sauerstoff. Ein Teil der Sauerstoffdefizitstellen des Quarzglases wird durch atomaren Stickstoff besetzt, was zur Ausbildung von Si-N-Bindungen und damit zu einer chemischen Einbindung von Stickstoff in das Quarzglas-Netzwerk führt. Ein Teil des atomaren Sauerstoffs reagiert mit oxidierbaren Verunreinigungen, so dass diese über die Gasphase abgeführt werden können.

Auf diese Weise wird je nach Dauer der zweiten Behandlungsphase und dem N₂O-Gehalt des Dotierofens eine Stickstoffbeladung der SiO₂-Körnung von 30 Gew.-ppm bis 100 Gew.-ppm eingestellt. Das poröse Granulat wird anschließend zu dichter, stickstoffdotierter Quarzglaskörnung verglast, wie bei Beispiel 1 beschrieben.

### Beispiel 3: Beladen der Quarzglaskörnung nach dem Verglasen mit Stickstoff

Die sauerstoffdefekthaltige, verglaste Quarzglaskörnung gemäß Beispiel 1 wird einer oxidativ-thermischen Dotierbehandlung unterzogen und dabei mit Stickstoff beladen. Hierzu wird eine besonders feinteilige Fraktion der Körnung mit Teilchengrößen bis 100 µm in einem zweistufigen Prozess zunächst bei einer Temperatur von 850 °C während einer Dauer von 1 Stunde einer Atmosphäre aus NH₃ (20 Vol.-%), Rest Helium, ausgesetzt. Diese Temperatur liegt oberhalb der Zersetzungstemperatur von NH₃, das sich unter Bildung von atomarem Stickstoff zersetzt und mit den Sauerstoffdefizitstellen des Quarzglases unter Bildung von Si-N-Bindungen reagiert. Danach wird der Ofen mit He gespült bis das NH₃ entfernt ist. Anschließend wird die stickstoffdotierte Körnung in einer oxidierend wirkenden Atmosphäre, die Sauerstoff oder ein Stickoxid enthält, bei einer Temperatur von 1.100°C thermisch behandelt, um oxidierbare Verunreinigungen und Defekte zu beseitigen.

Auf diese Weise wird eine Stickstoffbeladung der Quarzglaskörnung von 10 Gew.-ppm bis 50 Gew.-ppm eingestellt.

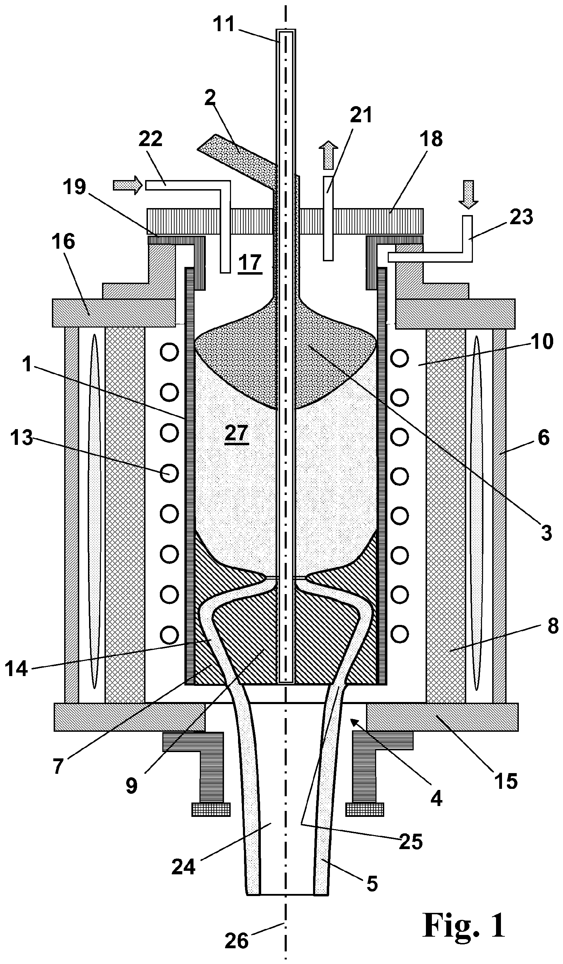

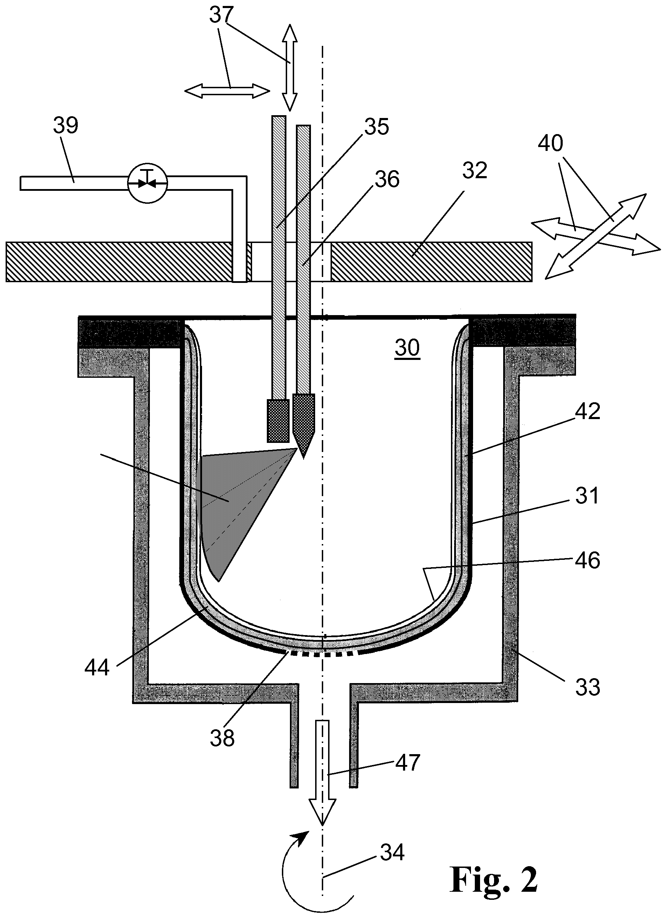

Die gemäß Beispiel 1 erhaltene sauerstoffdefekthaltige Quarzglaskörnung und die gemäß den Beispielen 2 und 3 hergestellte, sauerstoffdefekthaltige und stickstoffdotierte Quarzglaskörnung werden als Einsatzrohrstoff für die Herstellung von mit Stickstoff dotiertem Quarzglas eingesetzt. Die wird im Folgenden anhand der Herstellung eines mit Stickstoff dotierten Quarzglastiegels in einem Tiegelschmelzprozess und eines mit Stickstoff dotierten Quarzglasrohres in einem Tiegelziehverfahren und anhand der Figuren 1 und 2 beispielhaft näher erläutert.

### Beispiel 4: Ziehen eines stickstoffdotierten Quarzglasrohres aus einem Tiegel

Der Ziehofen gemäß **Figur 1** umfasst einen Schmelztiegel 1 aus Wolfram, in den von oben über einen Zufuhrstutzen 2 kontinuierlich SiO₂-Körnung 3 eingefüllt wird. Die SiO₂-Körnung 3 ist ein 50:50-Gemisch aus der oben anhand Beispiel 1 erläuterten sauerstoffdefekthaltigen Quarzglaskörnung (ohne Stickstoffdotierung) und Körnung aus natürlich vorkommendem Quarzrohstoff.

Der Schmelztiegel 1 ist von einem wassergekühlten Ofenmantel 6 unter Bildung eines mit Schutzgas gespülten Schutzgasraums 10 umgeben, innerhalb dessen eine poröse Isolationsschicht 8 aus oxidischem Isolationsmaterial und eine Widerstandsheizeinrichtung 13 zum Erhitzen der SiO₂-Körnung 3 untergebracht sind. Der Schutzgasraum 10 ist nach unten hin offen und ansonsten mit einer Bodenplatte 15 und mit einer Deckplatte 16 nach Außen abgedichtet. Der Schmelztiegel 1 umschließt einen Tiegel-Innenraum 17, der ebenfalls gegenüber der Umgebung mittels einer Abdeckung 18 und einem Dichtelement 19 abgedichtet ist. Durch die Abdeckung 18 ragt ein Einlass 22 und ein Auslass 21 für ein Tiegelinnenraum-Gas. Dabei handelt es sich um ein Gasgemisch aus 90 Vol.-% Wasserstoff und 10 Vol.-% N₂. Der Schutzgasraum 10 ist im oberen Bereich mit einem Gaseinlass 23 für reinen Wasserstoff versehen.

Im Bodenbereich des Schmelztiegels 1 befindet sich eine Ziehdüse 4 aus Wolfram. Diese setzt sich zusammen aus einem Ziehdüsen-Außenteil 7 und einem Dorn 9.

Im Schmelztiegel-Innenraum herrschen sehr hohe Temperaturen um 2100 °C, die den bereits vorhandenen Defekten eine zusätzliche Ausbildung von Defekten im Quarzglas-Netwerk der Körnung bewirken. Der im Tiegel-Innenraum 17 vorhandene Stickstoff reagiert mit den vorhandenen Sauerstoffdefizitstellen der Quarzglaskörnung. Auf diese Weise wird eine gewisse, moderate Menge an Stickstoff chemisch in das Quarzglas-Netzwerk eingebunden.

Die weiche Quarzglasmasse 27 gelangt über eine Strömungskanal 14 bis zum Düsenauslass 25 und wird als Rohrstrang 5 mit einem Innendurchmesser von 190 mm und einem Außendurchmesser von 210 mm vertikal nach unten in Richtung der Ziehachse 26 abgezogen.

Der Dorn 9 der Ziehdüse 4 ist mit einem Halterohr 11 aus Wolfram verbunden, das sich durch den Tiegel-Innenraum 17 erstreckt und über die obere Abdeckung 18 aus diesem herausgeführt ist. Außer zur Halterung des Dorns 9 dient das Halterohr 11 auch der Zufuhr eines Prozessgases zum Einstellen eines vorgegebenen Blasdrucks in der Innenbohrung 24 des Rohrstrangs 5.

Das Quarzglas des Rohrstrangs enthält eine Konzentration an chemisch gebundenem Stickstoff um 100 Gew.-ppm, eine Konzentration an Hydroxylgruppen von weniger als 1 Gew.-ppm und es zeichnet sich durch hohe Viskosität und Ätzbeständigkeit aus.

### Beispiel 5: Herstellen eines stickstoffdotierten Quarzglastiegels

Die Schmelzvorrichtung gemäß **Figur 2** umfasst eine Schmelzform 31 aus Metall mit einem Innendurchmesser von 75 cm, die mit einem Außenflansch auf einem Träger 33 aufliegt. Der Träger 33 ist um die Mittelachse 34 rotierbar. In den Innenraum 30 der Schmelzform 31 ragen eine Kathode 35 und eine Anode 36 (Elektroden 35; 36) aus Grafit, die - wie anhand der Richtungspfeile 37 angedeutet - innerhalb der Schmelzform 31 in allen Raumrichtungen verfahrbar sind.

Die offene Oberseite der Schmelzform 31 wird von einem Hitzeschild 32 in Form einer wassergekühlten Metallplatte überdeckt, die eine zentrale Durchgangsbohrung aufweist, durch die hindurch die Elektroden 35, 36 in die Schmelzform 31 hineinragen. Der Hitzeschild 32 ist mit einem Gaseinlass 39 für ein Prozessgas versehen. Bei dem Prozessgas handelt es sich entweder um ein Gasgemisch aus 80 Vol.-% He/ 20 Vol.-% O₂ oder ein Gasgemisch 60 Vol.-% He / 40 Vol.-% N₂O.

Zwischen der Schmelzform 31 und dem Hitzeschild 32 ist ein Entlüftungsspalt mit einer Weite von 50 mm vorgesehen (Fig. 1 zeigt diese Abmessung und alle anderen Abmessungen der Vorrichtung nur schematisch, nicht maßstäblich). Der Hitzeschild 32 ist in der Ebene oberhalb der Schmelzform 31 horizontal verfahrbar (in x- und y-Richtung), wie dies die Richtungspfeile 40 andeuten.

Der Raum zwischen dem Träger 33 und der Schmelzform 31 ist mittels einer Vakuumeinrichtung, die durch den Richtungspfeil 47 repräsentiert wird, evakuierbar. Die Schmelzform 31 weist eine Vielzahl von Durchlässen 38 auf (diese sind in Figur 1 nur symbolisch im Bodenbereich angedeutet), über die das an der Außenseite der Form 31 anliegende Vakuum 47 nach Innen durchgreifen kann.

In einem ersten Verfahrensschritt wird kristalline Körnung aus natürlichem, mittels Heißchlorierung gereinigtem Quarzsand, mit einer Korngröße im Bereich von 90 µm bis 315 µm in die um ihre Längsachse 34 rotierende Schmelzform 31 eingefüllt. Unter der Wirkung der Zentrifugalkraft und mittels einer Formschablone wird an der Innenwandung der Schmelzform 31 eine rotationssymmetrische tiegelförmige Körnungsschicht 42 aus mechanisch verfestigtem Quarzsand geformt. Die mittlere Schichtdicke der Körnungsschicht 42 beträgt etwa 12 mm.

In einem zweiten Verfahrensschritt wird auf der Innenwandung der Quarzsand-Schicht 42 eine Zwischenkörnungsschicht 44 aus eine gemäß obigem Beispiel 2 vorab mit Stickstoff in einer Menge von 80 Gew.-ppm dotierte Quarzglaskörnung aus synthetisch erzeugtem SiO₂ ebenfalls unter Einsatz einer Formschablone und unter anhaltender Rotation der Schmelzform 31 ausgeformt. Die mittlere Schichtdicke der Zwischenkörnungsschicht 44 beträgt ebenfalls etwa 12 mm.

Auf die Zwischenkörnungsschicht 44 wird in einem dritten Verfahrensschritt - ebenfalls unter Einsatz einer Formschablone und unter anhaltender Rotation der Schmelzform 31 - eine weitere SiO₂-Körnungsschicht (46) mit einer mittleren Dicke um 3 mm aus einer "Innenschichtkörnung" ausgeformt, die weder eine Stickstoff-Beladung noch Sauerstoffdefizitstellen (unterhalb der Nachweisgrenze) aufweist und die ansonsten der zur Ausbildung der Zwischenschicht eingesetzten Quarzglas-Körnung entspricht.

In einem weiteren Verfahrensschritt erfolgt das Verglasen der Körnungsschichten 42, 44 und 46. Dabei wird dem Innenraum 30 über den Gaseinlass 39 ein konstanter und geregelter Prozessgasstrom des Helium-Sauerstoff-Gemischs (80He/20O₂) von 300 l/min zugeführt. Der Schmelzvorgang wird beendet, bevor die Schmelzfront die Innenwandung der Schmelzform 31 erreicht.

Die innere Oberfläche des so hergestellten Quarzglastiegels wird von einer glatten, glasigen und blasenarmen Innenschicht aus synthetischem SiO₂ gebildet, die mit einer Außenschicht aus opakem Quarzglas fest verbunden ist. Etwa die Hälfte der Dicke der Außenschicht wird von dem mit Stickstoff in einer Menge von etwa 80 Gew.-ppm dotierten Quarzglas gebildet, während die Innenschicht frei von Stickstoff ist. Der Quarzglastiegel zeichnet sich durch eine hohe thermische Stabilität und lange Standzeit aus.

Das anhand des erfindungsgemäßen Verfahrens und unter Einsatz der erfindungsgemäßen Quarzglaskörnung hergestellte Quarzglas wurde in Bezug auf seine Viskosität und sein Aufschäumungsverhalten untersucht.

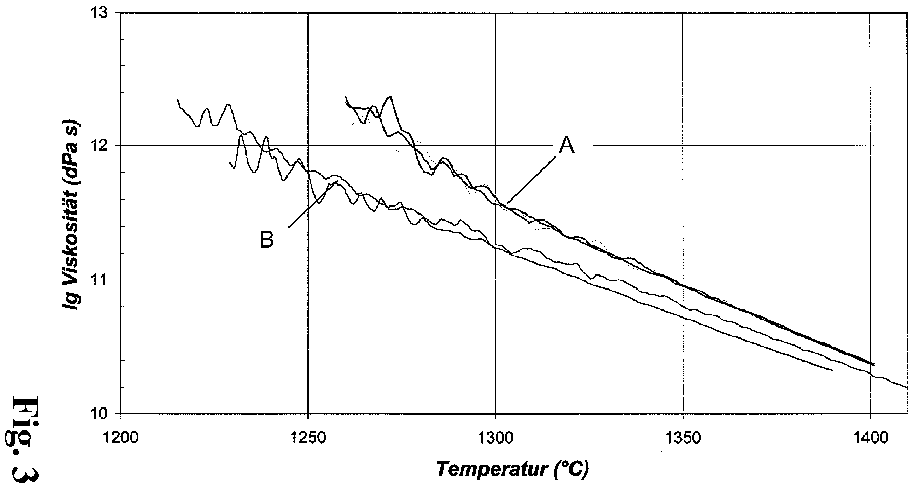

Das Diagramm von **Figur 3** zeigt Viskositätsprofile über den Temperaturbereich von 1.200 °C bis 1.400 °C von Standard-Quarzgläsern "B" ohne Stickstoffdotierung im Vergleich zu mehreren Quarzglasqualitäten "A" gemäß der Erfindung mit Stickstoff-Dotierungen im Bereich von 50 bis 100 Gew.-ppm. Daraus ist ersichtlich, dass die Viskosität der mit Stickstoff dotierten und gemäß der Erfindung hergestellten Quarzgläser "A" bei ansonsten gleichen Eigenschaften (Hydroxylgruppengehalt, Chlorgehalt) deutlich höher ist als die Viskosität von Standard-Quarzglas "B".

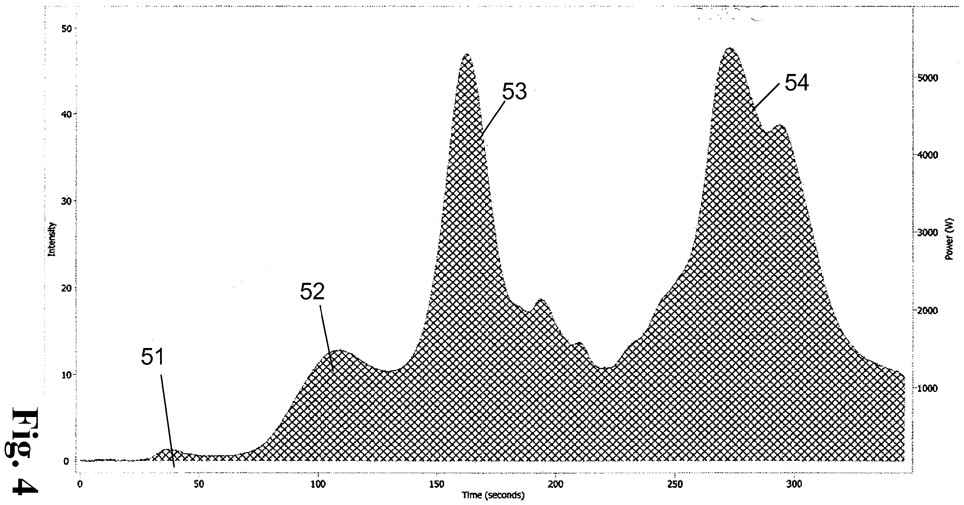

Das Diagramm von **Figur 4** zeigt das Ergebnis einer Heißgasextraktion eines anhand des erfindungsgemäßen Verfahrens herstellten Quarzglases mit einem mittleren Stickstoffgehalt von ca. 150 Gew.-ppm. Auf der y-Achse ist das Intensitätssignal der Messzelle aufgetragen, das zum aus dem Quarzglas ausgasenden Stickstoffvolumen proportional ist, und auf der x-Achse die Messdauer in Sekunden, wobei während der Messdauer eine Temperaturrampe zwischen 1.000 °C bis 2.200 °C mit einer Rampengeschwindigkeit von 20 Watt/s abgefahren wird.

Maxima der Stickstoffausgasung zeigen sich bei Temperaturen von etwa 1.020 °C (51), 1.500 °C (52), 1.800 °C (53) und 2.200 °C (54), wobei die beiden ersten Maxima vernachlässigbar sind. Das erste nennenswerte Maximum 53 der Stickstoffausgasung liegt somit bei einer Temperatur von 1.800 °C. Diese Temperatur liegt höher als übliche Sintertemperaturen von Quarzglaskörnung, so dass die bei der Temperatur um 1.800 °C ausgasende Stickstoffmenge bei Sinterprozessen in der Regel in dem Quarzglas verbleibt und nicht zu einer Blasenbildung führt.

Das maximale Ausgasvolumen 54 tritt erst bei der einer Temperatur um 2.200 °C auf. Dies ist jedoch eine Temperatur, die so hoch liegt, dass sie sogar bei üblichen Umformprozessen von Quarzglas nicht erreicht wird. Daher zeigt das erfindungsgemäß hergestellte Quarzglas tatsächlich beim Umformen, wie beispielsweise einem Homogenisierungsprozess durch Verdrillen und dergleichen, kein nennenswertes Aufschäumen.

## Patentansprüche

1. Verfahren zur Herstellung von mit Stickstoff dotiertem Quarzglas, bei dem ein SiO₂-Basisprodukt in Form von synthetisch erzeugter SiO₂-Körnung oder eines aus der SiO₂-Körnung bestehenden, porösen Halbzeugs bereitgestellt und das SiO₂-Basisprodukt in einem Heißprozess in einer ein stickstoffhaltiges Reaktionsgas enthaltenden Atmosphäre zu dem Quarzglas mit darin chemisch gebundenem Stickstoff verarbeitet wird, **dadurch gekennzeichnet, dass** als stickstoffhaltiges Reaktionsgas ein Stickoxid eingesetzt wird, und dass ein SiO₂-Basisprodukt eingesetzt wird, das beim Heißprozess bei einer Behandlungstemperatur im Temperaturbereich zwischen 650 und 1.000 °C und in einer Atmosphäre behandelt wird, die mindestens zeitweise zwischen 2 und 50 Vol.-% Stickoxid enthält, und das eine Konzentration an Sauerstoffmangeldefekten von mindestens 2 x 10¹⁵ cm⁻³ aber weniger als 2 x 10¹⁹ cm⁻³ aufweist, wobei das SiO₂-Basisprodukt aus SiO₂-Teilchen mit einer mittleren Teilchengröße im Bereich von 1 µm bis 200 µm besteht (D₅₀-Wert) und wobei der Stickstoffgehalt des Quarzglases auf einen Mittelwert im Bereich zwischen 1 Gew.-ppm und 3000 Gew.-ppm eingestellt wird.

2. Verfahren nach Anspruch 1, **dadurch gekennzeichnet, dass** der Stickstoffgehalt des Quarzglases auf einen Mittelwert im Bereich zwischen 1 Gew.-ppm und 150 Gew.-ppm eingestellt wird.

3. Verfahren nach Anspruch 1, **dadurch gekennzeichnet, dass** als stickstoffhaltiges Reaktionsgas Distickstoffmonoxid eingesetzt wird.

4. Verfahren nach einem der vorhergehenden Ansprüche, **dadurch gekennzeichnet, dass** ein SiO₂-Basisprodukt eingesetzt wird, das beim Heißprozess eine Konzentration an Sauerstoffmangeldefekten von mindestens 1 x 101⁶ cm⁻³ aufweist, wobei die Sauerstoffmangeldefekte durch eine Temperaturbehandlung des SiO₂-Basisprodukts in reduzierend wirkender Atmosphäre erzeugt werden.

5. Verfahren nach einem der vorhergehenden Ansprüche, **dadurch gekennzeichnet, dass** das SiO₂-Basisprodukt aus SiO₂-Teilchen mit einer mittleren Teilchengröße mit einer mittleren Teilchengröße im Bereich von 2 µm bis 60 µm besteht (D₅₀-Wert).

6. Verfahren nach einem der vorhergehenden Ansprüche, **dadurch gekennzeichnet, dass** der Stickoxidgehalt der Atmosphäre während des Heißprozesses mindestens zeitweise zwischen 5 und 20 Vol.-% beträgt.

7. Verfahren nach einem der vorhergehenden Ansprüche, **dadurch gekennzeichnet, dass** das SiO₂-Basisprodukt in einem Verglasungsschritt zu einem transparenten oder opaken Quarzglas gesintert oder erschmolzen wird, und dass das SiO₂-Basisprodukt vor dem Verglasungsschritt dem Heißprozess zur Beladung mit Stickstoff unterzogen wird.

8. Verfahren zur Herstellung eines Quarzglasstrangs aus mit Stickstoff dotierten Quarzglas unter Einsatz einer nach dem Verfahren gemäß den Ansprüche 1 bis 7 erhaltenen Quarzglaskörnung, indem die Quarzglaskörnung in einen Innenraum eines Schmelztiegels eingebracht, und darin bei einer Schmelztemperatur von mehr als 2.000 °C in einer Stickstoff enthaltenden Atmosphäre zu einer erweichten Quarzglasmasse erschmolzen, und die erweichte Quarzglasmasse als Quarzglasstrang aus einer Ziehdüse des Schmelztiegels abgezogen wird.

9. Verfahren nach Anspruch 8, **dadurch gekennzeichnet, dass** die Atmosphäre im Innenraum des Schmelztiegels Wasserstoff enthält.

10. Verfahren zur Herstellung eines Quarzglastiegels aus mit Stickstoff dotiertem Quarzglas unter Einsatz einer nach dem Verfahren gemäß den Ansprüche 1 bis 7 erhaltenen Quarzglaskörnung, indem aus der Quarzglaskörnung an einer Innenwandung eines Schmelztiegels eine Körnungsschicht geformt wird, und diese in einer Stickstoff enthaltenden Atmosphäre zu einer Quarzglasschicht gesintert wird.

## Claims

1. A method for producing nitrogen-doped quartz glass in which a SiO₂ base product is provided in the form of synthetically produced SiO₂ grains or in the form of a porous semifinished product made from the SiO₂ grains and the SiO₂ base product is processed into the quartz glass with the nitrogen chemically bound therein in a hot process in an atmosphere containing a reaction gas containing nitrogen, **characterized in that** a nitrogen oxide is used as the nitrogen-containing reaction gas, and that a SiO₂ base product is used that in the hot process is treated a treatment temperature range between 650°C and 1,000°C and in an atmosphere having a nitrogen oxide content between 5 and 20 vol. %, said SiO₂ base product has a concentration of oxygen deficient defects of at least 2 x 10¹⁵ cm⁻³ but less than 2 x 10¹⁹, wherein the SiO₂ base product comprises SiO₂ particles having a mean particle size in the range of 1 µm and 200 µm (D₅₀ value) and wherein the nitrogen content of the quartz glass is set to a mean value in the range between 1 wt. ppm and 3000 wt. ppm.

2. The method according to claim 1, **characterized in that** the nitrogen content of the quartz glass is set to a mean value in the range between 1 wt. ppm and 150 wt. ppm.

3. The method according to claim 1, **characterized in that** nitrous oxide is used as the nitrogen-containing reaction gas.

4. The method according to any one of the preceding claims, **characterized in that** a SiO₂ base product is used that in the hot process has a concentration of oxygen deficient defects of at least 1 x 10¹⁶ cm⁻³, whereby said oxygen deficient defects are produced by a temperature treatment of the SiO₂ base product in an atmosphere showing a reducing action.

5. The method according to any one of the preceding claims, **characterized in that** the SiO₂ base product consists of SiO₂ particles having a mean particle size in the range of 2 µm to 60 µm (D₅₀ value).

6. The method according to any one of the preceding claims, **characterized in that** the nitrogen oxide content of the atmosphere during the hot process is at least temporarily between 5 and 20 vol. %.

7. The method according to any one of the preceding claims, **characterized in that** the SiO₂ base product is sintered or molten in a vitrification step to obtain a transparent or opaque quartz glass, and that the SiO₂ base product is subjected to the hot process for loading with nitrogen prior to the vitrification step.

8. A method for producing a quartz glass strand from nitrogen-doped quartz glass by using a quartz glass grains obtained by a method according to any one of claims 1 to 7, in that the quartz glass grains are introduced into an interior space of a melting crucible and are molten therein at a melting temperature of more than 2,000°C in a nitrogen-containing atmosphere so as to obtain a softened quartz glass mass, and the softened quartz glass mass is drawn off as quartz glass strand from a drawing nozzle of the melting crucible.

9. The method according to claim 8, **characterized in that** the atmosphere in the interior of the crucible contains hydrogen.

10. The method for producing a quartz glass crucible from nitrogen-doped quartz glass by using the quartz glass grains obtained by a method according to any one of claims 1 to 7, in that a grain layer is formed from the quartz glass grains on an inner wall of a melting crucible and said layer is sintered in a nitrogen-containing atmosphere into a quartz glass layer.

## Revendications

1. Procédé de fabrication de verre de quartz dopé à l'azote, dans lequel un produit de base SiO₂ sous forme de granules de SiO₂ générés synthétiquement ou d'un produit semi-fini poreux, constitué de granules de SiO₂, est fourni et dans lequel le produit de base SiO₂, dans un processus à chaud dans une atmosphère contenant un gaz de réaction azoté, est transformé en verre de quartz avec de l'azote qui y est lié chimiquement, **caractérisé en ce qu'**un oxyde d'azote est utilisé comme gaz de réaction azoté, et **en ce qu'**un produit de base SiO₂ est utilisé, lequel, lors du processus à chaud, est traité à une température de traitement située dans la plage de température comprise entre 650 et 1000°C et dans une atmosphère qui contient au moins temporairement entre 2 et 50% en volume d'oxyde d'azote, et qui présente une concentration en lacunes d'oxygène d'au moins 2 x 10¹⁵ cm⁻³ mais de moins de 2 x 10¹⁹ cm⁻³, le produit de base SiO₂ étant constitué de particules de SiO₂ ayant une taille de particules moyenne située dans la plage de 1 µm à 200 µm (valeur D₅₀), et la teneur en azote du verre de quartz étant réglée sur une valeur moyenne située dans la plage comprise entre 1 ppm en poids et 3000 ppm en poids.

2. Procédé selon la revendication 1, **caractérisé en ce que** la teneur en azote du verre de quartz est réglée sur une valeur moyenne située dans la plage comprise entre 1 ppm en poids et 150 ppm en poids.

3. Procédé selon la revendication 1, **caractérisé en ce que** du protoxyde d'azote est utilisé comme gaz de réaction azoté.

4. Procédé selon l'une quelconque des revendications précédentes, **caractérisé en ce qu'**un produit de base SiO₂ est utilisé, lequel, lors du processus à chaud, présente une concentration en lacunes d'oxygène d'au moins 1 x 10¹⁶ cm⁻³, les lacunes d'oxygène étant générées par un traitement thermique du produit de base SiO₂ en atmosphère réductrice.

5. Procédé selon l'une quelconque des revendications précédentes, **caractérisé en ce que** le produit de base SiO₂ est constitué de particules de SiO₂ ayant une taille de particule moyenne située dans la plage de 2 µm à 60 µm (valeur D₅₀).

6. Procédé selon l'une quelconque des revendications précédentes, **caractérisé en ce que** la teneur en azote de l'atmosphère pendant le processus à chaud est au moins temporairement comprise entre 5 et 20% en volume.

7. Procédé selon l'une quelconque des revendications précédentes, **caractérisé en ce que** le produit de base SiO₂, dans une étape de vitrification, est fritté ou fondu en verre de quartz transparent ou opaque, et **en ce que** le produit de base SiO₂, avant l'étape de vitrification, est exposé au processus à chaud pour la charge en azote.

8. Procédé de fabrication d'une barre de verre de quartz en verre de quartz dopé à l'azote avec utilisation de granules de verre de quartz suivant le procédé selon les revendications 1 à 7, du fait que les granules de verre de quartz sont placées dans une chambre intérieure d'un creuset et y sont fondues en une masse de verre de quartz ramollie à une température de plus 2000°C dans une atmosphère contenant de l'azote et que la masse de verre de quartz ramollie est retirée d'une buse d'étirage du creuset en tant que barre de verre de quartz.

9. Procédé selon la revendication 8, **caractérisé en ce que** l'atmosphère dans la chambre intérieure du creuset contient de l'hydrogène.

10. Procédé de fabrication d'une barre de verre de quartz en verre de quartz dopé à l'azote avec utilisation de granules de verre de quartz suivant le procédé selon les revendications 1 à 7, du fait qu'à partir des granules de verre de quartz une couche de granules est formée sur une paroi intérieure d'un creuset et que celle-ci est frittée en une couche de verre de quartz dans une atmosphère contenant de l'azote.
